(19) Europäisches Patentamt / European Patent Office / Office européen des brevets

(11) **EP 3 766 836 A1**

(12) **EUROPEAN PATENT APPLICATION**
published in accordance with Art. 153(4) EPC

(43) Date of publication:
**20.01.2021 Bulletin 2021/03**

(21) Application number: **18909720.7**

(22) Date of filing: **13.11.2018**

(51) Int Cl.:
*C01G 23/00* [(2006.01)]   *F16D 69/02* [(2006.01)]

(86) International application number:
**PCT/JP2018/041922**

(87) International publication number:
**WO 2019/176166 (19.09.2019 Gazette 2019/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.03.2018 JP 2018045005**
**13.03.2018 JP 2018045006**

(71) Applicant: **TOHO TITANIUM CO., LTD.**
**Chigasaki-shi, Kanagawa 253-8510 (JP)**

(72) Inventors:
• **TAKI, Daisuke**
  **Chigasaki-shi, Kanagawa 253-8510 (JP)**
• **SAKAI, Hideki**
  **Chigasaki-shi, Kanagawa 253-8510 (JP)**

(74) Representative: **Müller-Boré & Partner**
**Patentanwälte PartG mbB**
**Friedenheimer Brücke 21**
**80639 München (DE)**

(54) **ALKALI METAL TITANATE, METHOD FOR PRODUCING ALKALI METAL TITANATE, AND FRICTION MATERIAL**

(57)    An alkali metal titanate comprising an alkali metal titanate phase and a composite oxide containing Al, Si and Na, wherein a percentage of a ratio of the number of moles of Na to a total number of moles of Na and an alkali metal X other than Na, $((Na/(Na + X)) \times 100)$, is 50 to 100 mol%, and

a percentage of a ratio of a total content of Si and Al to a content of Ti, $(((Si + Al)/Ti) \times 100)$, is 0.3 to 10 mass%.

   According to the present invention, an alkali metal titanate having a small content of a compound having a shorter diameter d of 3 $\mu$m or less, a longer diameter L of 5 $\mu$m or more and an aspect ratio (L/d) of 3 or more can be provided.

[FIG. 1]

EP 3 766 836 A1

**Description**

[Technical Field]

The present invention relates to an alkali metal titanate having a small content of a compound having a shorter diameter of 3 $\mu$m or less and a longer diameter of 5 $\mu$m or more and an aspect ratio of 3 or more (WHO fiber), a method for producing an alkali metal titanate capable of reducing the WHO fiber and a frictional material containing an alkali metal titanate having a small content of the WHO fiber.

[Background Art]

An alkali metal titanate is a useful material as a frictional material for friction sliding members such as brake linings, disc pads, clutch facings composing control gears of automobiles, railroad cars, airplanes and industrial machines.
A frictional material particularly containing, among alkali metal titanates, potassium hexatitanate fibers (fibrous particles) represented by a formula $K_2O \cdot nTiO_2$ (n is an integer of 1 to 12) wherein n is 6 is known to have particularly good heat resistance and the like, and Patent Literature 1, for example, discloses that potassium hexatitanate of a desired shape can be produced by mixing a titanium compound and a potassium compound having an average particle size of 0.1 to 10 mm and adjusting a firing temperature of the mixture to within a temperature range from 800 to 1300°C.

[Citation List]

[Patent Literature]

[Patent Literature 1] Japanese Patent Laid-Open No. 2008-266131

[Disclosure of Invention]

[Technical Problem]

However, potassium hexatitanate as described in Patent Literature 1 is likely to form a fibrous structure depending on a firing temperature and thus requires cumbersome steps such as minor adjustments in a firing temperature of the mixture and a temperature increasing rate during firing to produce potassium hexatitanates other than of shapes regulated by World Health Organization (WHO) (hereinafter, WHO fiber). Note that WHO fiber refers to the compound having a shorter diameter of 3 $\mu$m or less and a longer diameter of 5 $\mu$m or more and an aspect ratio of 3 or more. Reduction of such a WHO fiber in alkali metal titanates is demanded.
Thus, the present invention has an object to provide an alkali metal titanate having a small content of the WHO fiber, a method for producing an alkali metal titanate capable of reducing the WHO fiber and a frictional material containing an alkali metal titanate having a small content of the WHO fiber.

[Solution to Problem]

The above problems are solved by the present inventions presented below.
That is, the present invention (1) provides an alkali metal titanate, comprising an alkali metal titanate phase and a composite oxide containing Al, Si and Na,
wherein a percentage of a ratio of the number of moles of Na to a total number of moles of Na and an alkali metal X other than Na, $((Na/(Na + X)) \times 100)$, is 50 to 100 mol%, and
a percentage of a ratio of a total content of Si and Al to a content of Ti, $(((Si + Al)/Ti) \times 100)$, is 0.3 to 10 mass%.
The present invention (2) provides the alkali metal titanate of (1), wherein a proportion of the number of fibers of a compound having a shorter diameter d of 3 $\mu$m or less, a longer diameter L of 5 $\mu$m or more and an aspect ratio (L/d) of 3 or more is 0.2% or less.
The present invention (3) provides a method for producing an alkali metal titanate, comprising:

a raw material mixing step of mixing raw materials containing Ti, an alkali metal, Si and Al such that a percentage of a ratio of the number of moles of Na to a total number of moles of Na and an alkali metal X other than Na, $((Na/(Na + X)) \times 100)$, is 50 to 100 mol% to prepare a raw material mixture, a firing step of firing the raw material mixture at a firing temperature of 900 to 1300°C to obtain a fired product of the raw material mixture, and
a pulverizing step of pulverizing the fired product of the raw material mixture.

The present invention (4) provides the method for producing an alkali metal titanate of (3), wherein the raw material mixture contains a titanium source containing Ti and an alkali metal source containing an alkali metal, and
the titanium source contains Al and Si.

The present invention (5) provides the method for producing an alkali metal titanate of (4), wherein, as the titanium source, a titanium ore having a content of Si of 0.5 to 3.0 mass% and a content of Al of 0.1 to 1.0 mass% based on a content of Ti is contained, and
a content ratio of the titanium ore in the titanium source is 20 mass% or more.

The present invention (6) provides the method for producing an alkali metal titanate of (4) or (5), comprising mixing the titanium source and the alkali metal source in the raw material mixing step such that a ratio of the number of moles of Ti to a total number of moles of Na and an alkali metal X other than Na (Ti/(Na + X)) in the raw material mixture is 2.4 to 3.6.

The present invention (7) provides a frictional material comprising the alkali metal titanate of (1) or (2) .

The present invention (8) provides an alkali metal titanate, having:

a percentage of a ratio of the number of moles of Na to a total number of moles of Na and K, (Na/(Na + K)) $\times$ 100), of 50 to 100 mol%,
an average particle size (D50) by the laser diffraction scattering method of 15 $\mu$m or less, and
a content of a compound having a shorter diameter d of 3 $\mu$m or less, a longer diameter L of 5 $\mu$m or more and an aspect ratio (L/d) of 3 or more, of 0.025 vol% or less.

The present invention (9) provides the alkali metal titanate of (8), wherein the average particle size (D50) is 1 to 15 $\mu$m.

The present invention (10) provides a method for producing an alkali metal titanate, comprising:

a raw material mixing step of mixing a titanium source containing Ti and an alkali metal source containing an alkali metal such that a percentage of a ratio of the number of moles of Na to a total number of moles of Na and K, (Na/(Na + K)) $\times$ 100), is 50 to 100 mol% to prepare a raw material mixture,
a firing step of firing the raw material mixture at a firing temperature of 900 to 1300°C to obtain a fired product of the raw material mixture, and
a pulverizing step of pulverizing the fired product of the raw material mixture.

The present invention (11) provides a frictional material comprising the alkali metal titanate of (8) or (9) .

[Advantageous Effect of Invention]

The present invention can accordingly provide an alkali metal titanate having a small content of the WHO fiber, a method for producing an alkali metal titanate capable of reducing the WHO fiber and a frictional material containing an alkali metal titanate having a small content of the WHO fiber.

[Brief Description of Drawings]

[Figure 1] Figure 1 shows a STEM image of the alkali metal titanate of Example 5.
[Figure 2] Figure 2 is a result of an O mapping analysis of the alkali metal titanate of Example 5.
[Figure 3] Figure 3 is a result of a Si mapping analysis of the alkali metal titanate of Example 5.
[Figure 4] Figure 4 is a result of a Na mapping analysis of the alkali metal titanate of Example 5.
[Figure 5] Figure 5 is a result of an Al mapping analysis of the alkali metal titanate of Example 5.
[Figure 6] Figure 6 is a result of a Ti mapping analysis of the alkali metal titanate of Example 5.
[Figure 7] Figure 7 is a view of partially enlarged Figure 1 showing observation points a to c.
[Figure 8] Figure 8 is a lattice observation image at observation point a shown in Figure 7.
[Figure 9] Figure 9 is a lattice observation image at observation point b shown in Figure 7.
[Figure 10] Figure 10 is a lattice observation image at observation point c shown in Figure 7.
[Figure 11] Figure 11 is a result of an EDS analysis at observation point a shown in Figure 7.
[Figure 12] Figure 12 is a result of an EDS analysis at observation point b shown in Figure 7.
[Figure 13] Figure 13 is a result of an EDS analysis at observation point c shown in Figure 7.

[Description of Embodiments]

<Alkali metal titanate of the first embodiment of the present invention>

Hereinafter, an embodiment of the alkali metal titanate of the first embodiment of the present invention will be described in detail. The following description is to describe an example of the embodiment and the present invention is not limited to this embodiment. Note that a composition of a compound, when denoted by element symbols in the first embodiment of the present invention, is not limited to metals, ions, or other states but includes all the states possibly taken depending on the situation.

The alkali metal titanate of the first embodiment of the present invention is an alkali metal titanate, comprising an alkali metal titanate phase and a composite oxide containing Al, Si and Na,
wherein a percentage of a ratio of the number of moles of Na to a total number of moles of Na and an alkali metal X other than Na, $((Na/(Na + X)) \times 100)$, is 50 to 100 mol%, and
a percentage of a ratio of a total content of Si and Al to a content of Ti, $(((Si + Al)/Ti) \times 100)$, is 0.3 to 10 mass%.

The alkali metal titanate of the first embodiment of the present invention comprises an alkali metal titanate phase and a composite oxide containing Al, Si and Na. The alkali metal titanate phase herein refers to a phase containing an alkali metal titanate represented by a formula (1a) to be described later. The alkali metal titanate of the first embodiment of the present invention is an aggregate of phases containing alkali metal titanate in the state of containing composite oxides containing Al, Si and Na.

Data of energy dispersive X-ray spectroscopy of examples to be described later reveal that some of the alkali metal titanate of the first embodiment of the present invention have gaps present among particles of alkali metal titanate phases. That is, the alkali metal titanate of the first embodiment of the present invention has parts in which particles are not in contact with each other. It is considered that the first embodiment of the present invention has some cases where composite oxides containing Al, Si and Na are present in such noncontact parts (gaps) among the alkali metal titanates.

The presence of composite oxides containing Al, Si and Na in gaps among particles of the alkali metal titanate phases in the alkali metal titanate of the first embodiment of the present invention can be observed by subjecting the alkali metal titanate to energy dispersive X-ray spectroscopy (EDX or EDS). EDX usually comes with a Scanning Electron Microscope (SEM) or a Transmission Electron Microscope (TEM) (SEM-EDX or TEM-EDX).

The alkali metal titanate phase of the alkali metal titanate of the first embodiment of the present invention is particles of composite oxides containing Ti and an alkali metal and contains sodium as the essential element as the alkali metal element. Note that the "alkali metal" in the present invention means a collective term of 6 elements, lithium (Li), sodium (Na), potassium (K), rubidium (Rb), cesium (Cs) and francium (Fr), which are Group 1 of the periodic table from which hydrogen (H) is excluded.

Examples of the alkali metal titanate phase include a composite oxide represented by the following formula (1a) :

$$A_xTi_yO_z \qquad (1a)$$

(wherein, A is 1 or more alkali metals, x is 1.5 to 2.5, y is 5.5 to 6.5 and z is 12.0 to 14.0. y/x is 2.4 to 3.6 and preferably 2.6 to 3.4.). The composite oxide of an alkali metal titanate represented by the above formula (1a) (alkali metal titanate phase) has sometimes alkali metal titanates having compositions partially deviated from the above formula (1a) such as a lattice defect and an element substitution. The present invention encompasses alkali metal titanates containing alkali metal titanates phases of such structures.

In the above formula (1a), when sodium is contained and alkali metals other than sodium are not contained as the alkali metal element, x refers to a value of the sodium, and when both sodium and alkali metals other than sodium are contained, x refers to the total value of the sodium and the alkali metals other than sodium.

The alkali metal titanate of the first embodiment of the present invention can contain an alkali metal X other than Na, that is K, Li, Rb, Cs and/or Fr in a range in which the effect of the present invention is not affected. In the alkali metal titanate of the first embodiment of the present invention, a percentage of a ratio of the number of moles of sodium to the total number of moles of sodium and an alkali metal X other than sodium, $((Na/(Na + X)) \times 100)$, is 50 to 100 mol% and preferably 70 to 100 mol%. When a ratio of the number of moles of sodium to the total number of moles of sodium and an alkali metals other than sodium is within the above range, an alkali metal titanate is likely to have a proportion of the number of fibers of a compound having a shorter diameter d of 3 $\mu$m or less, a longer diameter L of 5 $\mu$m or more and an aspect ratio (L/d) of 3 or more (WHO fiber) of 0.2% or less during firing. When a content of sodium to the total amount of alkali metals (Na + X) contained in an alkali metal titanate is within the above range, a content of the composite oxides containing aluminum, silicon and sodium increases. As a result, the composite oxides containing aluminum, silicon and sodium inhibit the formation of the WHO fiber in the alkali metal titanate. Thus, the alkali metal titanate having a proportion of the number of the WHO fibers of 0.2% or less is likely to be obtained without pulverizing a raw material mixture under a strong pulverization condition after fired during production thereof.

Particularly, in the case where the alkali metal other than sodium is potassium, when a content ratio of potassium to the total amount of the alkali metals ((K/total alkali metals) $\times$ 100) contained in the alkali metal titanate of the first embodiment of the present invention is 50 mol% or more, the formation of the composite oxide containing aluminum, silicon and sodium is inhibited, hence not preferable. The reason is presumed that the composite oxide containing aluminum, silicon and sodium is considered composed of vitreous materials including aluminum but the vitreousness is not formed by silicon and potassium.

The alkali metal titanate of the first embodiment of the present invention can contain a plurality of alkali metal X other than sodium. In the alkali metal titanate of the first embodiment of the present invention, for example, when potassium is contained as the alkali metal other than sodium, and when further alkali metal Y (Li, Rb, Cs and/or Fr) other than sodium and potassium are contained, a percentage of a ratio of the total number of moles of sodium and potassium to the total number of moles of the alkali metal Y (((Na + K)/Y) $\times$ 100) is preferably 90 mol% or more, particularly preferably 95 mol% or more and more preferably 100 mol%.

A ratio of the number of moles of Ti to the total number of moles of an alkali metal (Ti/alkali metal) in the alkali metal titanate of the first embodiment of the present invention is preferably 2.4 to 3.6 and particularly preferably 2.6 to 3.4. When the alkali metal titanate of the first embodiment of the present invention contains only sodium as the alkali metal, the above alkali metal refers to a value of the sodium, and when sodium and an alkali metal other than sodium are contained, the above alkali metal refers to the total value of the sodium and the alkali metal other than sodium.

In the present invention, the content ratio of alkali metals contained in the alkali metal titanate and the content ratio of Ti can be determined using an inductively coupled plasma (ICP) atomic emission spectroscopy analyzer (manufactured by Hitachi High-Tech Science Corporation, SPS-3100).

In the alkali metal titanate of the first embodiment of the present invention, a percentage of a ratio of the total content of Si and Al to a content of Ti, (((Si + Al)/Ti) $\times$ 100), is 0.3 to 10 mass%, preferably 0.3 to 2.0 mass% and particularly preferably 0.35 to 2.0 mass%. When the total content of Si and Al of the alkali metal titanate is within the above range, a content of the compound (WHO fiber) having a shorter diameter d of 3 $\mu$m or less, a longer diameter L of 5 $\mu$m or more and an aspect ratio (L/d) of 3 or more becomes smaller. On the other hand, when the total content of Si and Al of the alkali metal titanate is less than the above range, a content of the WHO fiber becomes larger. Further, when the total content of Si and Al of the alkali metal titanate is more than the above range, brake performance becomes poorer in the form of a frictional material.

In the alkali metal titanate of the first embodiment of the present invention, a ratio of a content of Si to a content of Al (Si:Al) is, in terms of mass ratio, preferably 4:1 to 2:1, and particularly preferably 3.7:1 to 2.2:1. When a ratio of a content of Si to a content of Al (Si:Al) of the alkali metal titanate is within the above range, a content of the WHO fiber is likely to be smaller.

The alkali metal titanate of the first embodiment of the present invention can contain other elements. Examples of other elements include metal elements such as Fe and Mg. Note that the contamination of inevitable impurities is acceptable in the alkali metal titanate of the first embodiment of the present invention.

An average particle size (D50) of the alkali metal titanate of the first embodiment of the present invention is 15 $\mu$m or less and preferably 1 to 10 $\mu$m. When an average particle size D50 of the alkali metal titanate is within the above range, brake performance becomes good in the form of a frictional material. Note that the average particle size of the alkali metal titanate is D50 determined by the laser diffraction scattering method and refers to the particle size at which volume-based cumulative distribution becomes 50%.

In the alkali metal titanate of the first embodiment of the present invention, a proportion of the number of fibers of the compound (WHO fiber) having a shorter diameter d of 3 $\mu$m or less, a longer diameter L of 5 $\mu$m or more and an aspect ratio (L/d) of 3 or more is preferably 0.2% or less and particularly preferably 0.15% or less. Note that the proportion of the number of the WHO fibers in the alkali metal titanate of the first embodiment of the present invention refers to a proportion of the number of the WHO fibers to the total number of compounds in the alkali metal titanate of the first embodiment of the present invention.

In the alkali metal titanate of the first embodiment of the present invention, the measurement method of a shorter diameter d, a longer diameter L, an aspect ratio (L/d) and a proportion of the number of the WHO fibers in the alkali metal titanate of the first embodiment of the present invention of an object to be measured determined by a dynamic image analysis is not particularly limited as long as a method does not depart from the scope of the invention and the determination is made by, for example, the following procedure. Using a dynamic image analyzer (manufactured by SEISHIN ENTERPRISE Co., Ltd., PITA-3), particles of an alkali metal titanate of an object to be measured are shot at 10000 to 100000 points, with the shorter diameter being "shorter diameter d" and the longer diameter being "longer diameter L" of each particle in the obtained images thereby to calculate an aspect ratio of each particle by a formula "aspect ratio = L/d". Further, each particle is considered a column having a shorter diameter d and a longer diameter L, with a volume of the column being a volume of each particle thereby to calculate by a formula "volume = $\pi \times (d/2)^2 \times L$". Then, a proportion of the number of the WHO fibers is determined by a formula "((total number of fibers of particles having a shorter diameter d of 3 $\mu$m or less, a longer diameter L of 5 $\mu$m or more observed and an aspect ratio (L/d) of 3 or more)/(total number of all particles observed)) × 100". The number of shooting points of an object to be measured can be suitably changed depending on an analyzer used. In the present invention, for example, an analyzer capable of analyzing using shooting points of less than 10000 points or an analyzer requiring shooting points of more than 100000 points can be used as long as the proportion of the number of the WHO fibers can be determined.

In the alkali metal titanate of the first embodiment of the present invention, the composite oxides containing Al, Si and Na may be present in gaps of alkali metal titanate phases. In the alkali metal titanate of the first embodiment of the present invention, composite oxides containing Ai, Si and Na may be present so that gaps of this phase are filled. Such a structure inhibits the formation of the WHO fiber in the alkali metal titanate, and the following mechanism is conceivable as the reason therefor.

The alkali metal titanate of the first embodiment of the present invention presumably has a smaller content of the WHO fiber because the composite oxide containing Al, Si and Na (silica alumina composite oxide (aluminum silicate)) produced from Na, Si and Al present in a raw material mixture during firing is present in a growth direction of alkali metal titanate phase crystals during firing and inhibits the alkali metal titanate phase from growing to fibrous crystals, and additionally even if fibrous alkali metal titanate phase grows, the composite oxide containing Al, Si and Na functions as an adhesive and bonds fibrous crystals with each other to form particulates thereby to prevent the formation of the WHO fiber.

<Method for producing an alkali metal titanate of the first embodiment of the present invention>

Hereinafter, an embodiment of the method for producing an alkali metal titanate of the first embodiment of the present invention will be described in detail. The following description is to describe an example of the embodiment and the present invention is not limited to this embodiment.

The method for producing an alkali metal titanate of the first embodiment of the present invention is a method for producing an alkali metal titanate, comprising:

a raw material mixing step of mixing raw materials containing Ti, an alkali metal, Si and Al such that a percentage of a ratio of the number of moles of Na to the total number of moles of Na and an alkali metal X other than Na, ((Na/(Na + X)) × 100), is 50 to 100 mol% to prepare a raw material mixture,
a firing step of firing the raw material mixture at a firing temperature of 900 to 1300°C to obtain a fired product of the raw material mixture, and
a pulverizing step of pulverizing the fired product of the raw material mixture.

The method for producing an alkali metal titanate of the first embodiment of the present invention comprises the raw material mixing step, the firing step and the pulverizing step.

The raw material mixing step is a step of mixing raw materials for producing an alkali metal titanate containing Ti, an alkali metal, Si and Al to prepare the raw material mixture containing Ti, the alkali metal, Si and Al in predetermined ratios. The raw material mixture contains a titanium source containing titanium and an alkali metal source containing an alkali metal. The titanium source preferably contains Al and Si from the viewpoint of reducing a content of the compound having a shorter diameter d of 3 $\mu$m or less, a longer diameter L of 5 $\mu$m or more and an aspect ratio (L/d) of 3 or more (WHO fiber). In the raw material mixing step, the raw materials for producing an alkali metal titanate are not particularly limited as long as a raw material mixture containing Ti, an alkali metal, Si and Al in predetermined ratios can be obtained. In the raw material mixing step, for example, a titanium source, an alkali metal source, a silicon source and an aluminum source are used as raw materials for producing an alkali metal titanate and these are mixed. Alternatively, in the raw material mixing step, for example, a titanium source containing Al and Si can be used as the supply source of Al and Si as the raw material for producing an alkali metal titanate, or an aluminum source containing Al and a silicon source containing Si can also be used.

The titanium source is not particularly limited as long as a compound contains titanium and examples include compounds containing titanium such as titanium oxide, metatitanic acid, orthotitanic acid, titanium chloride, titanium ore and hydrous titania. Examples of the titanium ore include rutile ore, ilmenite, anatase and brookite. A Ti content in a titanium ore contained as the titanium source is, in terms of $TiO_2$, preferably 85 mass% or more and particularly preferably 90 mass% or more, to the total mass of the titanium ore.

The above titanium ore used as the titanium source contains various elements other than titanium. For example, a rutile ore, when used as the titanium source, contains silicon and aluminum and hence a compound containing silicon as the silicone source and a compound containing aluminum as the aluminum source do not have to be used. The titanium ore is suitable as the titanium source from the viewpoint of handleability of raw materials.

The compound containing titanium to be the titanium source may be solid or liquid. When the titanium source is solid, an average particle size of the titanium source is preferably 0.5 to 1000 $\mu$m and particularly preferably 0.5 to 850 $\mu$m in the aspect of good handleability of raw materials and mixability and reactivity with other raw materials. Note that the average particle size of the titanium source is D50 determined by the laser diffraction scattering method and refers to the particle size at which volume-based cumulative distribution becomes 50%.

The alkali metal source is a compound containing alkali metals and contains sodium as the essential element of the alkali metal in the present invention. Thus, a compound containing sodium is applied as the alkali metal source. Further, in the present invention, 1 or a plurality of alkali metals other than sodium, K, Li, Rb, Cs and Fr can be contained in the compound containing sodium. Alternatively, as the alkali metal sources, a compound containing potassium, a compound containing rubidium, a compound containing cesium, a compound containing francium and/or a mixture of these compounds can be contained in addition to the compound containing sodium.

The sodium source, that is, a compound containing sodium, is not particularly limited and examples include compounds such as sodium carbonate, sodium oxide, sodium hydroxide, sodium oxalate and sodium nitrate. Of these, sodium carbonate and sodium hydroxide are preferable as the sodium sources in the aspect of good mixability and reactivity with a titanium source and easy availability at a low price. The potassium source, that is, a compound containing potassium is not particularly limited and examples include compounds like alkali metal salts such as potassium carbonate, potassium hydroxide and potassium nitrate. Of these, potassium carbonate and potassium hydroxide are preferable as the potassium sources in the aspect of good mixability and reactivity with a titanium source and easy availability at a low price.

Examples of the rubidium source, cesium source and francium source include various alkali metal salts, respectively.

A compound containing an alkali metal to be the alkali metal source may be solid or liquid. When the alkali metal source is solid, a particle size distribution of the alkali metal source is, in consideration of easiness in mixing with other raw materials and easiness in pulverization, preferably 4 mass% or less of 1 mm or more and 7 mass% or less of 125 $\mu$m or less and particularly preferably 3 mass% or less of 1 mm or more and 6 mass% or less of 125 $\mu$m or less. The particle size distribution of the alkali metal source is the particle size evaluation by sieving.

When silicon and aluminum are not contained in the compound used as the titanium source, a silicon source and an aluminum source need to be arranged separately. For example, the silicon source is not particularly limited as long as a compound contains silicon and does not contain halogen and examples include oxides of silicon such as silicon dioxide, silica and colloidal silica. Additionally, examples of the silicon source include organosilicon compounds such as silicone compounds having a siloxane bond.

A compound containing silicon to be the silicon source may be solid or liquid. When the silicon source is solid, an average particle size of the silicon source is preferably 100 $\mu$m or less and particularly preferably 1 to 50 $\mu$m in the aspect of good handleability of raw materials and mixability and reactivity with other raw materials. Note that the average particle size of the silicon source is D50 determined by the laser diffraction scattering method and refers to the particle size at which volume-based cumulative distribution becomes 50%.

Further, the aluminum source is not particularly limited as long as a compound contains aluminum and examples include oxides of aluminum such as aluminum oxide, aluminum hydroxide, aluminum carbonate, aluminum sulfate and aluminum nitrate.

A compound containing aluminum to be the aluminum source may be solid or liquid. When the aluminum source is solid, an average particle size of the aluminum source is preferably 100 $\mu$m or less and particularly preferably 1 to 50 $\mu$m in the aspect of good handleability of raw materials and mixability and reactivity with other raw materials. Note that the average particle size of the aluminum source is D50 determined by the laser diffraction scattering method and refers to the particle size at which volume-based cumulative distribution becomes 50%.

The raw material mixture can contain a silica alumina composite oxide. In other words, a silica alumina composite oxide can be used in the raw material mixing step as the silicon source in whole or part and as the aluminum source in whole or part. Additionally, it is preferable to contain a silica alumina composite oxide as the silicon source and the aluminum source to be contained in the raw material mixture in the aspect of good workability such as supplying raw materials and cutting down mixing procedures.

The raw material mixture can contain "a titanium ore having a content of Si of 0.5 to 3.0 mass% and preferably 0.5 to 2.5 mass% based on a content of Ti and a content of Al of 0.1 to 1.0 mass% and preferably 0.1 to 0.8 mass% based on a content of Ti" (hereinafter, described as the titanium ore of the raw material mixture). In other words, the titanium ore of the raw material mixture can be used in the raw material mixing step as the titanium source in whole or part, as the silicon source in whole or part and as the aluminum source in whole or part.

When a content ratio of the above titanium ore of the raw material mixture to all titanium sources in the raw material mixture is within the range to be described later, a content of the compound having shorter diameter d of 3 $\mu$m or less, a longer diameter L of 5 $\mu$m or more and an aspect ratio (L/d) of 3 or more (WHO fiber) to be obtained through the firing step and the pulverizing step can be smaller in the alkali metal titanate.

A content of the above titanium ore of the raw material mixture to all titanium sources is 20 mass% or more, preferably 25 mass% or more, particularly preferably 50 mass% or more and more preferably 100 mass%. When a content ratio of the above titanium ore of the raw material mixture to all titanium sources is within the above range, a content of the WHO fiber in the alkali metal titanate obtained through the firing step and the pulverizing step can be smaller.

The reason why a content of the WHO fiber in the alkali metal titanate obtained through the firing step and the pulverizing step in the method for producing an alkali metal titanate of the first embodiment of the present invention becomes smaller is conceived that Na, Si and Al contained in the titanium sources in the raw material mixture form, during firing, a silica alumina composite oxide containing aluminum, silicon and sodium and this silica alumina composite oxide containing aluminum, silicon and sodium is present in a growth direction of alkali metal titanate phase crystals and inhibits the alkali metal titanate phase from growing to fibrous crystals. Additionally, the reason for a reduced content of the WHO fiber in the alkali metal titanate is presumed that even if fibrous alkali metal titanate phase grows, the silica alumina composite oxide containing aluminum, silicon and sodium functions as an adhesive and bonds fibrous phases with each other to form particulates thereby to prevent the formation of the WHO fiber. When a content of Si in a titanium ore is less than the above range, the effect of reducing a content of the WHO fiber is less likely to be achieved, whereas when the content is more than the above range, the alkali metal titanate having an intended crystal structure is less likely to be obtained. Further, when a content of Al in a titanium ore is less than the above range, the effect of reducing a content of the WHO fiber is less likely to be achieved, whereas when the content is more than the above range, the alkali metal titanate having an intended crystal structure is less likely to be obtained. Furthermore, a content of Al in a titanium ore is less than the above range, the effect of reducing a content of the WHO fiber is less likely to be achieved, whereas when the content is more than the above range, the alkali metal titanate having an intended crystal structure is less likely to be obtained. Additionally, when a content ratio of the above titanium ore of the raw material mixture to all titanium sources is less than the above range, the effect of reducing a content of the WHO fiber is less likely to be achieved.

In the raw material mixing step, the alkali metal sources are mixed such that a percentage of a ratio of the number of moles of Na to the total number of moles of Na and an alkali metal X other than Na, $((Na/(Na + X)) \times 100)$, in the raw material mixture is 50 to 100 mol% and preferably 70 to 100 mol%. When a ratio of the number of moles of Na to the total number of moles of an alkali metal X other than Na in the raw material mixture is within the above range, an alkali titanate having a shorter diameter d of more than 3 $\mu$m, a longer diameter L of less than 5 $\mu$m and an aspect ratio (L/d) of less than 3 is likely to be obtained thereby enabling the reduction of a content of the WHO fiber in the alkali metal titanate obtained through the firing step and the pulverizing step.

For example, in the case where an alkali metal other than Na is K, and further alkali metal Y other than Na and K (1 or more of any of Li, Rb, Cs and Fr) are contained, the alkali metal sources are mixed in the raw material mixing step such that a percentage of a ratio of the total number of moles of Na and K to the total number of moles of the alkali metal Y, $(((Na + K)/Y) \times 100)$, in the raw material mixture is preferably 90 mol% or more, particularly preferably 95 mol% or more and more preferably 100 mol%. When the raw material mixture contains only sodium but does not contain potassium as the alkali metal, the above (Na + K) refers to a value of the sodium, and when both sodium and potassium are contained, the above (Na + K) refers to the total value of the sodium and the potassium.

In the raw material mixing step, the titanium source and the alkali metal source are mixed such that a ratio of the number of moles of Ti to the total number of moles of the alkali metals (Ti/alkali metals) in the raw material mixture is 2.4 to 3.6 and preferably 2.6 to 3.4. When a ratio of the number of moles of Ti to the total number of moles of the alkali metals in the raw material mixture is within the above range, a compound meeting the chemical formula of the desired composite compound of titanates is obtained. When the raw material mixture contains only sodium as the alkali metal, the above value of alkali metal refers to a value of the sodium, and when only sodium and potassium are contained, the above value of alkali metal refers to the total value of the sodium and the potassium.

The method for mixing each raw material such as the titanium source and alkali metal source in the raw material mixing step is not particularly limited and may be dry mixing or wet mixing. Examples of dry mixing the titanium source and alkali metal source include a method of mixing dry using a mixer such as a vibrating mill, a vibrating rod mill, a ball mill, a bead mill, a turbo mill, a planet mill or a Henschel mixer, in addition to pulverization using a mortar. Further, examples of the wet mixing the titanium source and the alkali metal source include a method of wet mixing using a mixer such as a vibrating mill, a vibrating rod mill, a ball mill, a bead mill, a turbo mill or a planet mill. When mixing wet, examples of the solvent used for the wet mixing include water, methanol, ethanol, butanol, acetone, heptane, toluene, xylene and cyclohexane.

In the raw material mixing step, an inorganic oxide such as iron oxide, aluminum oxide, silicon oxide or zirconium oxide, an organic matter such as wood chip or wood pellet, an organic solvent such as methanol, ethanol, toluene, hexane, heptane or acetone or water may be mixed as needed in addition to each raw material such as the titanium source and the alkali metal source.

The firing step is a step of firing the raw material mixture obtained by carrying out the raw material mixing step to obtained a fired product of the raw material mixture.

A firing temperature in the firing step is 900 to 1300°C and preferably 950 to 1250°C. When a firing temperature is within the above range, an alkali metal titanate having a shorter diameter d of more than 3 $\mu$m, a longer diameter L of less than 5 $\mu$m and an aspect ratio (L/d) of less than 3 is likely to be obtained thereby enabling the reduction of a content of the compound having a shorter diameter d of 3 $\mu$m or less, a longer diameter L of 5 $\mu$m or more and an aspect ratio (L/d) of 3 or more (WHO fiber) in the alkali metal titanate obtained through the firing step and the pulverizing step. On the other hand, when a firing temperature is less than the above range, unreacted raw material mixture remains, whereas when the temperature is more than the above range, the alkali metal titanate having a shorter diameter d of 3 $\mu$m or less, a longer diameter L of 5 $\mu$m or more and an aspect ratio (L/d) of 3 or more is likely to be obtained.

A firing time in the firing step can be suitably selected as needed. When a firing time is too long, however, crystals of an alkali metal titanate phase overgrow and a specific surface area of the alkali metal titanate tends to be too small. Additionally, the crystal growth rate of an alkali metal titanate phase varies depending on the firing temperature. For this reason, a firing time according to a firing temperature is selected in the firing step so that an intended specific surface area of the alkali metal titanate can be obtained through the pulverizing step.

A specific surface area of the alkali metal titanate obtained through the pulverizing step is preferably 0.5 to 4.5 g/m$^2$ and particularly further preferably 0.7 to 4.0 g/m$^2$. In the case of using a titanium ore as the titanium source, a content ratio of the titanium ore contained in the titanium source within the above range can reduce a content of the WHO fiber in the alkali metal titanate. Thus, such an alkali metal titanate has adjusted firing conditions and are easily pulverized thereby enabling a specific surface area to be smaller.

A firing atmosphere when firing the raw material mixture in the firing step can be suitably selected as needed and examples include oxidizing atmospheres such as air atmosphere and oxygen gas atmosphere.

In the firing step, the fired product obtained by firing the raw material mixture may be repeatedly fired again.

Thus, the fired product of the raw material mixture can be obtained by carrying out the firing step.

The pulverizing step is a step of pulverizing the fired product of the raw material mixture to obtain an alkali metal titanate having the desired powder properties.

In the pulverizing step, a method for pulverizing the fired product obtained by carrying out the firing step is not particularly limited. Examples of the method for carrying out dry pulverization include a method of pulverizing dry using a pulverizer such as a vibrating mill, a vibrating rod mill, a ball mill, a bead mill, a turbo mill, a planet mill, a pulverizer, a jet mill, a hammer mill or a pin mill, in addition to pulverization using a mortar.

In the pulverizing step, pulverization conditions when pulverizing the fired product of the raw material mixture obtained by carrying out the firing step are suitably selected depending on physical properties required for an alkali metal titanate intended to be produced.

Thus, the alkali metal titanate of the first embodiment of the present invention having the desired powder properties is obtained by carrying out the pulverizing step.

In the method for producing an alkali metal titanate of the first embodiment of the present invention, silicon and aluminum are allowed to be present with titanium and an alkali metal in the raw material mixture thereby enabling the reduction of a content of the compound having a shorter diameter d of 3 $\mu$m or less, a longer diameter L of 5 $\mu$m or more and an aspect ratio (L/d) of 3 or more (WHO fiber) in the alkali metal titanate obtained through the firing step and the pulverizing step.

<Alkali metal titanate of the second embodiment of the present invention>

Hereinafter, an embodiment of the alkali metal titanate of the second embodiment of the present invention will be described in detail. The following description is to describe an example of the embodiment and the present invention is not limited to this embodiment. Note that a composition of a compound, when denoted by element symbols in the second embodiment of the present invention, is not limited to metals, ions, and other states but includes all the states possibly taken depending on the situation.

The alkali metal titanate of the second embodiment of the present invention has:

a percentage of a ratio of the number of moles of Na to the total number of moles of Na and K, (Na/(Na + K)) $\times$ 100), of 50 to 100 mol%,
an average particle size (D50) by the laser diffraction scattering method of 15 $\mu$m or less, and
a content of a compound having a shorter diameter d of 3 $\mu$m or less, a longer diameter L of 5 $\mu$m or more and an aspect ratio (L/d) of 3 or more (WHO fiber), of 0.025 vol% or less.

The alkali metal titanate of the second embodiment of the present invention is particles of composite oxides containing titanium and an alkali metal, and contains sodium as the essential element as the alkali metal. Note that the "alkali metal" in the present invention means a collective term of 6 elements, lithium (Li), sodium (Na), potassium (K), rubidium (Rb), cesium (Cs) and francium (Fr), which are Group 1 of the periodic table from which hydrogen (H) is excluded.

The alkali metal titanate of the second embodiment of the present invention can contain an alkali metal other than Na and K, that is, Li, Rb, Cs and/or Fr in a range in which the effect of the present invention is not affected. In the alkali metal titanate of the second embodiment of the present invention, a percentage of a ratio of the total number of moles of Na and K to the total number of moles of an alkali metal $((Na + K)/alkali metal) \times 100)$ is preferably 90 mol% or more, particularly preferably 95 mol% or more and more preferably 100 mol%.

A ratio of the number of moles of Ti to the total number of moles of an alkali metal (Ti/alkali metal) in the alkali metal titanate of the second embodiment of the present invention is preferably 2.4 to 3.6 and particularly preferably 2.6 to 3.4. When the alkali metal titanate of the second embodiment of the present invention contains only sodium as the alkali metal, the above alkali metal refers to a value of the sodium, and when only sodium and potassium are contained, the above alkali metal refers to the total value of the sodium and the potassium. Examples of the alkali metal titanate of the second embodiment of the present invention include a composite oxide represented by the following formula (1b) :

$$A_xTi_yO_z \qquad (1b)$$

(wherein, A is Na or Na and K. x is 1.5 to 2.5, y is 5.5 to 6.5, and z is 12.0 to 14.0. y/x is 2.4 to 3.6 and preferably 2.6 to 3.4.). The composite oxide of an alkali metal titanate represented by the above formula (1b) has sometimes alkali metal titanates having compositions partially deviated from the above formula (1b) such as a lattice defect and an element substitution. The present invention encompasses alkali metal titanates of such structures.

In the above formula (1b), when sodium is contained and potassium is not contained as the alkali metal element, x refers to a value of the sodium, and when both sodium and potassium are contained, x refers to the total value of the sodium and the potassium.

In the alkali metal titanate of the second embodiment of the present invention, a percentage of a ratio of the number of moles of Na to the total number of moles of Na and K, $((Na/(Na + K)) \times 100)$, is 50 to 100 mol% and preferably 70 to 100 mol%. When a ratio of the number of moles of Na to the total number of moles of Na and K is within the above range, an alkali metal titanate having a content of the compound having a shorter diameter d of 3 $\mu$m or less, a longer diameter L of 5 $\mu$m or more and an aspect ratio (L/d) of 3 or more (WHO fiber) of 0.025% vol% or less is likely to be obtained without pulverizing a raw material mixture under a strong pulverization condition after fired during production thereof. Additionally, the alkali metal titanate of the second embodiment of the present invention does not require a strong pulverization step, in which pulverization is carried out under a strong pulverization condition, thereby becoming a low price.

In the present invention, the content ratio of alkali metals contained in the alkali metal titanate and a content ratio of Ti can be determined using an inductively coupled plasma (ICP) atomic emission spectroscopy analyzer (manufactured by Hitachi High-Tech Science Corporation, SPS-3100).

A content of the WHO fiber in the alkali metal titanate of the second embodiment of the present invention is 0.025 vol% or less.

In the second embodiment of the present invention, the measurement method of a shorter diameter d, a longer diameter L, an aspect ratio (L/d) and a proportion of the number of the WHO fibers in the alkali metal titanate of the second embodiment of the present invention of an object to be measured determined by a dynamic image analysis is not particularly limited as long as a method does not depart from the scope of the invention and the determination is made by, for example, the following procedure. Using a dynamic image analyzer (manufactured by SEISHIN ENTERPRISE Co., Ltd., PITA-3), particles of an alkali metal titanate of an object to be measured are shot at 10000 to 100000 points, with the shorter diameter being "shorter diameter d" and the longer diameter being "longer diameter L" of each particle in the obtained images thereby to calculate an aspect ratio of each particle by a formula "aspect ratio = L/d". Further, each particle is considered a column having a shorter diameter d and a longer diameter L, with a volume of the column being a volume of each particle thereby to calculate by a formula "volume = $\pi \times (d/2)^2 \times L$". Then, a content (volume ratio) of the WHO fiber is determined by a formula "((total volume of particles having a shorter diameter d of 3 $\mu$m or less, a longer diameter L of 5 $\mu$m or more observed and an aspect ratio (L/d) of 3 or more)/(total volume of the number of all particles observed)) $\times$ 100". The number of shooting points of an object to be measured can be suitably changed depending on an analyzer used. In the present invention, for example, an analyzer capable of analyzing using shooting points of less than 10000 points or an analyzer requiring shooting points of more than 100000 points can be used as long as the proportion of the number of the WHO fibers can be determined.

An average particle size (D50) by the laser diffraction method of the alkali metal titanate of the second embodiment of the present invention is 15 $\mu$m or less and preferably 1 to 15 $\mu$m. When an average particle size (D50) of the alkali metal titanate by the laser diffraction method is within the above range, durability of the frictional material increases. Note that D50 in the present invention is determined by the laser diffraction scattering method and refers to the particle size at which volume-based cumulative distribution becomes 50%.

An average crystallite size of the alkali metal titanate of the second embodiment of the present invention is preferably 150 nm or less and particularly preferably 80 to 150 nm. Note that, in the present invention, the average crystallite size is a value obtained by carrying out X-ray diffraction analysis under measurement conditions shown in Table 1 using a powder X-ray diffractometer and calculating by the following Scherrer equation (2) based on a half width (plane indices (200)) of the main peak to be determined by the obtained XRD measurement result.

$$\tau = K\lambda / ((\beta - \beta_{std}) \cdot cos\theta) \qquad (2)$$

$\tau$: Crystallite size (Å)
K: Scherrer constant (shape factor (0.9))
$\lambda$: X-ray wavelength (X-ray wavelength Cu-K$\alpha$1 1.5405(Å))
$\beta$: Half width of main peak (200)
$\beta_{std}$: Half width of standard substance (= 0.029 (°))
$\theta$: Bragg angle (°)

[Table 1]

| Target | Cu |
|---|---|
| Standard substance | LaB6 Half width of main peak at $2\theta$ = 22 to 24° |
| Tube voltage (kV) | 45V |
| Tube current (mA) | 40 mA |
| Measurement method | Concentration method using 1D high-speed detector |
| Detector | High-speed semiconductor detector accelerator |

<Method for producing an alkali metal titanate of the second embodiment of the present invention>

The method for producing an alkali metal titanate of the second embodiment of the present invention is a method for producing the alkali metal titanate of the present invention comprising a raw material mixing step of mixing a titanium source containing Ti and an alkali metal source containing an alkali metal such that a percentage of a ratio of the number of moles of Na to the total number of moles of Na and K, (Na/(Na + K)) × 100), is 50 to 100 mol% to prepare a raw material mixture,

a firing step of firing the raw material mixture at a firing temperature of 900 to 1300°C to obtain a fired product of the raw material mixture, and

a pulverizing step of pulverizing the fired product of the raw material mixture.

The method for producing an alkali metal titanate of the second embodiment of the present invention comprises the raw material mixing step, the firing step and the pulverizing step.

The raw material mixing step is a step of mixing a titanium source containing Ti and an alkali metal source containing an alkali metal to prepare a raw material mixture containing Ti and the alkali metal in predetermined ratios.

The titanium source is not particularly limited as long as a compound contains titanium and examples include titanium oxide, metatitanic acid, orthotitanic acid, titanium chloride, rutile ore and hydrous titania. Of these, titanium oxide and rutile ore are preferable in the aspect of good handleability of raw materials and mixability and reactivity with the alkali metal source and being a low price.

A compound containing titanium to be the titanium source may be solid or liquid. When the titanium source is solid, an average particle size of the titanium source is preferably 0.5 to 1000 $\mu$m and particularly preferably 0.5 to 850 $\mu$m in the aspect of handleability of raw materials and mixability and reactivity with the alkali metal source. Note that the average particle size of the titanium source is D50 determined by the laser diffraction scattering method.

The alkali metal source is a compound containing an alkali metal and examples include a compound containing sodium, a compound containing potassium, a compound containing sodium and potassium and a mixture of these compounds. The raw material mixture is a compound containing sodium and can contain potassium as the alkali metal source. Additionally, the raw material mixture can contain a compound containing an alkali metal other than Na and K, that is, Li, Rb, Cs and/or Fr as the alkali metal source in a range in which the effect of the present invention is not affected.

The sodium source, that is, a compound containing sodium, is not particularly limited and examples include sodium carbonate, sodium oxide, sodium hydroxide, sodium oxalate and sodium nitrate. Of these, sodium carbonate and sodium hydroxide are preferable as the sodium sources in the aspect of good mixability and reactivity with a titanium source and easy availability at a low price. The potassium source, that is, a compound containing potassium is not particularly limited and examples include compounds like alkali metal salts such as potassium carbonate, potassium hydroxide and potassium nitrate. Of these, potassium carbonate and potassium hydroxide are preferable as the potassium sources in the aspect of good mixability and reactivity with a titanium source and easy availability at a low price.

A compound containing alkali metals to be the alkali metal source may be solid or liquid. When the alkali metal source is solid, a particle size distribution of the alkali metal source is, in consideration of easiness in mixing with the titanium source and easiness in pulverization, preferably 4 mass% or less of 1 mm or more and 7 mass% or less of 125 $\mu$m or less and particularly preferably 3 mass% or less of 1 mm or more and 6 mass% or less of 125 $\mu$m or less. The particle size distribution of the alkali metal source is the particle size evaluation by sieving.

In the raw material mixing step, the alkali metal sources are mixed such that a percentage of a ratio of the number of moles of Na to the total number of moles of Na and K, (Na/(Na + K)) $\times$ 100), in the raw material mixture is 50 to 100 mol% and preferably 70 to 100 mol%. When a ratio of the number of moles of Na to the total number of moles of Na and K in the raw material mixture is within the above range, an alkali metal titanate having a ratio of particles having an aspect ratio of 3 or more of 2.0 vol% or less is likely to be obtained and thus, an alkali metal titanate having a content of the compound having a shorter diameter d of 3 $\mu$m or less, a longer diameter L of 5 $\mu$m or more and an aspect ratio (L/d) of 3 or more (WHO fiber) of 0.025 vol% or less is likely to be obtained without pulverizing a raw material mixture under a strong pulverization condition in the pulverizing step after fired during production thereof.

In the raw material mixing step, the alkali metal sources are mixed such that a percentage of a ratio of the total number of moles of Na and K to the total number of moles of an alkali metal (((Na + K)/alkali metals) $\times$ 100) in the raw material mixture is preferably 90 mol% or more, particularly preferably 95 mol% or more and more preferably 100 mol%. Note that when the raw material mixture contains sodium but does not contain potassium as the alkali metal, the above (Na + K) refers to a value of the sodium, and when both sodium and potassium are contained, the above (Na + K) refers to the total value of the sodium and the potassium.

In the raw material mixing step, the titanium source and the alkali metal source are mixed such that a ratio of the number of moles of Ti to the total number of moles of Na and K (Ti/(Na + K)) in the raw material mixture is preferably 2.4 to 3.6 and particularly preferably 2.6 to 3.4. When a ratio of the number of moles of Ti to the total number of moles of Na and K in the raw material mixture is within the above range, a compound meeting the chemical formula of the desired composite compound of titanates is obtained.

The method for mixing the titanium source and the alkali metal source in the raw material mixing step is not particularly limited and may be dry mixing or wet mixing. Examples of dry mixing the titanium source and the alkali metal source include a method of mixing dry using a mixer such as a vibrating mill, a vibrating rod mill, a ball mill, a bead mill, a turbo mill, a planet mill or a Henschel mixer. Further, examples of the wet mixing the titanium source and the alkali metal source include a method of mixing wet using a mixer such as a vibrating mill, a vibrating rod mill, a ball mill, a bead mill, a turbo mill or a planet mill. When mixing wet, examples of the solvent used for the wet mixing include water, methanol, ethanol, butanol, acetone, heptane, toluene, xylene and cyclohexane.

In the raw material mixing step, an inorganic oxide such as iron oxide, aluminum oxide, silicon oxide or zirconium oxide, an organic matter such as wood chip or wood pellet, an organic solvent such as methanol, ethanol, toluene, hexane, heptane or acetone or water may be mixed as needed in addition to the titanium source and the alkali metal source.

The firing step is a step of firing the raw material mixture obtained by carrying out the raw material mixing step to obtain a fired product of the raw material mixture.

A firing temperature in the firing step is 900 to 1300°C and preferably 950 to 1250°C. When a firing temperature is within the above range, an alkali metal titanate having a content of the compound having a shorter diameter d of 3 $\mu$m or less, a longer diameter L of 5 $\mu$m or more and an aspect ratio (L/d) of 3 or more (WHO fiber) of 0.025 vol% or less is likely to be obtained without pulverizing a raw material mixture under a strong pulverization condition in the pulverizing step after fired during production thereof. Further, according to the method for producing an alkali metal titanate of the present invention, an alkali metal titanate having a content of the WHO fiber of 0.025 vol% or less can be obtained through firing and pulverization without pulverizing under a strong pulverization condition thereby enabling the production of a low price alkali metal titanate. On the other hand, when a firing temperature is less than the above range, unreacted raw material mixture remains, whereas when the temperature is more than the above range, an alkali metal titanate having a ratio of the WHO fiber of more than 0.025 vol% is likely to be obtained.

A firing time in the firing step can be suitably selected as needed. When a firing time is too long, however, crystals of an alkali metal titanate overgrow and an alkali metal titanate having an average particle size (D50) of 15 $\mu$m or less tends to be difficult to be obtained. Additionally, the crystal growth rate of an alkali metal titanate varies depending on the firing temperature. For this reason, a firing time according to a firing temperature is selected in the firing step so that an average particle size (D50) of an alkali metal titanate obtained by firing is 15 $\mu$m or less and preferably 1 to 15 $\mu$m.

A firing atmosphere when firing the raw material mixture in the firing step can be suitably selected as needed and examples include oxidizing atmospheres such as air atmosphere and oxygen gas atmosphere.

In the firing step, a fired product obtained by firing the raw material mixture may be repeatedly fired again.

Thus, the fired product of the raw material mixture can be obtained by carrying out the firing step.

The pulverizing step is a step of pulverizing the fired product of the raw material mixture to obtain an alkali metal titanate having the desired powder properties.

In the pulverizing step, a method for pulverizing the fired product obtained by carrying out the firing step is not particularly limited. Examples of the method for carrying out dry pulverizing include a method of pulverizing dry using a pulverizer such as a vibrating mill, a vibrating rod mill, a ball mill, a bead mill, a turbo mill, a planet mill, a pulverizer, a jet mill, a hammer mill or a pin mill, in addition to pulverization using a mortar.

In the pulverizing step, pulverization conditions when pulverizing the fired product of the raw material mixture obtained by carrying out the firing step are suitably selected depending on physical properties required for the alkali metal titanate intended to be produced.

Thus, the alkali metal titanate of the second embodiment of the present invention having the desired powder properties is obtained by carrying out the pulverizing step.

An alkali metal titanate containing primarily potassium titanate or potassium as the alkali metal is, when fired, likely to grow as fibrous crystals having an aspect ratio, which is a ratio of a shorter diameter d to a longer diameter L (L/d), of more than 3. For this reason, when a frictional material which uses the conventional alkali metal titanate containing primarily potassium titanate or potassium as the alkali metal as a filling, the longer the length of fiber of the alkali metal titanate containing primarily potassium titanate or potassium as the alkali metal, which is the filling, the higher the abrasion durability becomes as the filling is less likely to fall from matrixes due to an anchor effect.

In contrast, the alkali metal titanate of the second embodiment of the present invention is an alkali metal titanate containing primarily sodium as the alkali metal thereby likely to be crystals, when fired, having an aspect ratio, which is a ratio of a shorter diameter d to a longer diameter L (L/d), of 3 or less. Then, the present inventors found that when an alkali metal titanate having an aspect ratio (L/d) of 3 or less and containing primarily sodium as the alkali metal is used as a filling of a frictional material, the smaller a particle size of the filling is, that is, an average particle size (D50) of 15 $\mu$m or less and preferably 1 to 15 $\mu$m, the higher the abrasion durability becomes. Additionally, when an average particle size (D50) of the filling is within a range of 15 $\mu$m or less and preferably 1 to 15 $\mu$m, an alkali metal titanate having a filling containing primarily sodium as the alkali metal has higher abrasion durability than the alkali metal titanate having a filling containing primarily potassium titanate or potassium as the alkali metal.

Further, in the production of an alkali metal titanate, when the alkali metal is primarily sodium in the raw material mixture of the alkali metal titanate, crystals are likely to have an aspect ratio (L/d) of 3 or less when fired and thus an alkali metal titanate having a content of the compound having a shorter diameter d of 3 $\mu$m or less, a longer diameter L of 5 $\mu$m or more and an aspect ratio (L/d) of 3 or more (the WHO fiber) of 0.025 vol% or less is likely to be obtained without pulverization under a strong pulverization condition in the pulverizing step after fired. Additionally, according to the method for producing an alkali metal titanate of the present invention, an alkali metal titanate having a content of the WHO fiber of 0.025 vol% or less can be obtained through firing and pulverization without pulverization under a strong pulverization condition thereby enabling the production of a low price alkali metal titanate.

Due to these findings, the alkali metal titanate of the second embodiment of the present invention can provide a material for frictional materials enabling the obtention of a frictional material of a low price and good durability.

Potassium titanate containing only potassium as the alkali metal requires pulverization under a strong pulverization condition to achieve the reduction of a content of the WHO fiber. However, strong pulverization to be carried out poses problems such as, for example, increasing the production steps due to an increased number of pulverization causing a higher cost and leading the life reduction of a pulverizer by carrying out strong pulverization.

In the alkali metal titanate of the second embodiment of the present invention and the method for producing an alkali metal titanate of the second embodiment of the present invention, sodium is used or alkali metal titanate in which potassium and sodium are used in combination is used as the alkali metal thereby eliminating the need of pulverization under a strong pulverization condition, whereby various issues associated with when carrying out the pulverization can be solved. Specifically, in the alkali metal titanate of the second embodiment of the present invention and the method for producing an alkali metal titanate of the second embodiment of the present invention, a content ratio of sodium in the alkali metal is 50 to 100 mol% and preferably 70 to 100 mol%.

The alkali metal titanates (the first embodiment and the second embodiment) of the present invention, or the alkali metal titanates obtained by the methods for producing an alkali metal titanate of the present invention (the first embodiment and the second embodiment), can be preferably used as the material for a frictional material for brakes. For example, when the alkali metal titanate of the present invention, or the alkali metal titanate obtained by the method for producing an alkali metal titanate of the present invention, is used as the material for a frictional material for brakes, a raw material mixture for frictional material containing 15 to 25 mass% of the alkali metal titanate of the present invention or the alkali metal titanate obtained by the method for producing an alkali metal titanate of the present invention, 9 to 11 mass% of a phenol resin, 7 to 9 mass% of graphite (artificial graphite), 25 to 30 mass% of barium sulfate (barite), 6 to 8 mass% of zirconium silicate, 2 to 4 mass% of antimony trisulfide, 0 to 9 mass% of a copper fiber and powder, 4 to 6 mass% of a cashew dust, 1 to 3 mass% of a rubber powder, 3 to 5 mass% of an aramid fiber, 4 to 6 mass% of mica and 0 to 2 mass% of chromite is molded to a shape of the frictional material for brakes and applied to a surface pressure of 10 to 400 kgf/cm$^2$ at a thermomolding temperature of 70 to 250°C thereby to obtain a frictional material for brakes.

Hereinafter, the present invention is further specifically described in reference to examples but these are merely examples and do not limit the present invention.

[Examples]

(Example 1)

(Raw material mixture)

A titanium oxide ($TiO_2$ (a commercial product) for raw material, an average particle size 0.6 μm) and a rutile ore (a commercial product) as the titanium sources, sodium carbonate (manufactured by Tokuyama Corporation, product name Soda Ash Dense) as the sodium source and potassium carbonate (manufactured by Unid Co., Ltd.) as the potassium source were used and, in an alumina mortar, pulverized and mixed for 10 minutes or more in the mixing ratio shown in Table 2 thereby to obtain a raw material mixture.

<Composition of the rutile ore>

Contents of the oxides in the rutile ore were, to the total mass of the rutile ore, 95 mass% of $TiO_2$, 1.8 mass% of $SiO_2$ and 0.4 mass% of $Al_2O_3$, respectively. That is, a percentage of a ratio of the total contents of $SiO_2$ and $Al_2O_3$ to the content of $TiO_2$ ($((SiO_2 + Al_2O_3)/TiO_2) \times 100$) was 2.3 mass%.
Further, when each element was converted in terms of atoms, a content of Ti in the rutile ore to the total mass of the rutile ore was 57 mass%. Additionally, a content of Si was 1.5 mass% and a conte of Al was 0.4 mass% to the content of Ti in the rutile ore, and a percentage of a ratio of the total content of Si and Al to the content of Ti, ($((Si + Al)/Ti) \times 100$), was 1.9 mass%.

(Firing)

The raw material mixture obtained above was fired in a box furnace (manufactured by MOTOYAMA Co., Ltd.) under an air atmosphere by increasing a temperature to the firing temperature shown in the following Table 2 at a temperature increasing rate of 5°C/min for the time shown in the following Table 1, and then allowed to cool in the air. Subsequently, pulverization treatment was carried out using an alumina mortar for 5 minutes or more thereby to obtain a powder alkali metal titanate.
The obtained alkali metal titanate was analyzed. The results are shown in the following Table 2.

(Examples 2 to 16 and Comparative Examples 1 to 6)

Raw material mixtures were obtained in the same manner as in Example 1 expect that the titanium source, the sodium source and the potassium source were mixed in the mixing ratios shown in Table 2 to Table 6, respectively. Subsequently, alkali metal titanates were obtained in the same manner as in Example 1 and the obtained alkali metal titanates were analyzed and the results were shown in Table 2 to Table 6, respectively.

(Analysis)

<Composition>

Measurement was carried out using a powder X-ray diffractometer (X-ray source: CuKα ray, manufactured by PANalytical B.V. model number: X'Part-ProMPD).

<Analysis of WHO fiber>

A content ratio (volume ratio) of the compound having a shorter diameter d of 3 μm or less, a longer diameter L of 5 μm or more and an aspect ratio (L/d) of 3 or more (WHO fiber), the number of the WHO fibers and a proportion of the number of the WHO fibers were measured using a dynamic image analyzer (manufactured by SEISHIN ENTERPRISE Co., Ltd., PITA-3). The analysis conditions are as follows.

    Sample: 20 mg
    Carrier liquid: purified water (16 g)

Dispersion conditions

Carrier liquid flow rate: 500 μL/sec.
Sample dispersion liquid flow rate: 0.31 μL/sec.
Observation magnification: 10 times
Number of samples measured: 70000 samples

<Contained element analysis>

The alkali metal titanate obtained using only the rutile ore (content ratio 100 mass%) as the Ti source (Example 5) was analyzed for contained elements as follows.

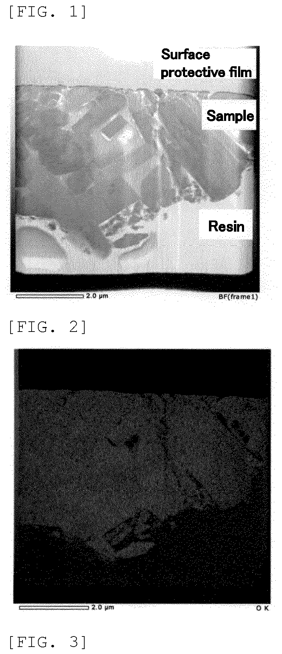

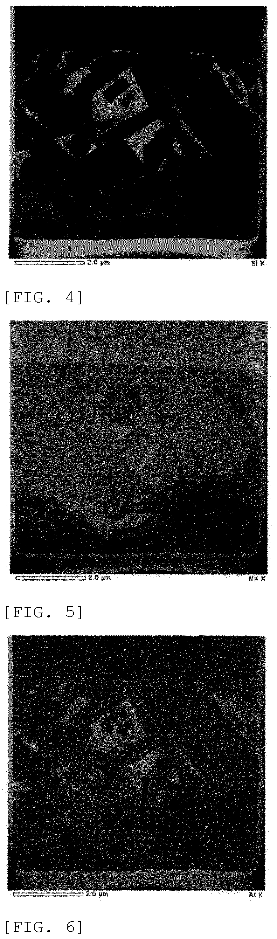

The alkali metal titanate obtained in Example 5 was embedded in a visible light-curing resin and cured to subsequently manufacture a thin section, which was observed using a scanning electron microscope (manufactured by JEOL Ltd., JEM-2100F) equipped with an energy dispersive X-ray spectroscopy (EDS) (manufactured by JEOL Ltd., JED-2300T) and the obtained STEM image was shown in Figure 1. Additionally, the STEM image was analyzed using EDS data (mapping image processing and composition qualitative analysis). The results on contained element mapping analysis using the EDS data were shown in Figure 2 to Figure 6. Note that Figure 2 to Figure 6 show the results of contained element mappings of O, Si, Na, Al and Ti, respectively.

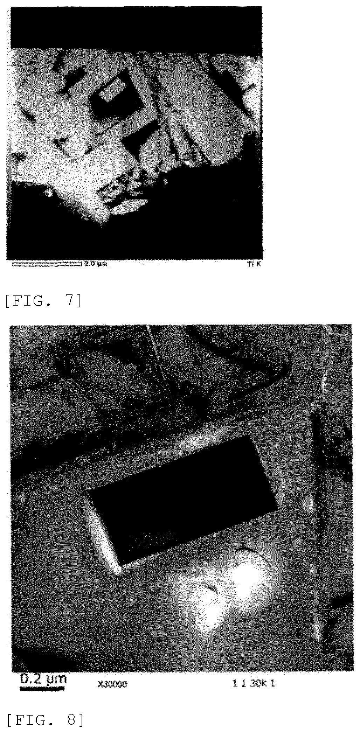

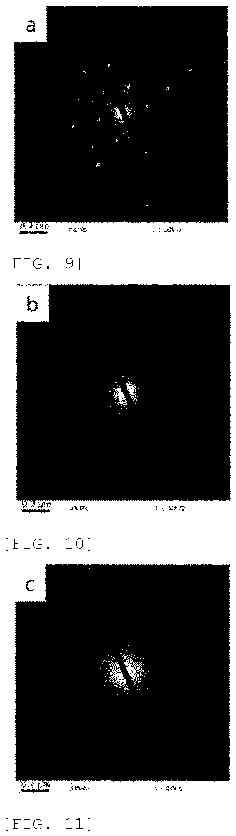

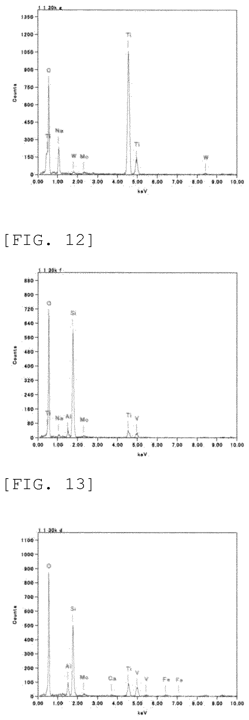

Further, the alkali metal titanate obtained in Example 5 was observed at the observation points a to c using a scanning electron microscope as shown in Figure 7 and the obtained lattice observation images were shown in Figure 8 to Figure 10. Furthermore, the results of EDS analysis (composition qualitative analysis) at the observation points a to c using the EDS data were shown in Figure 11 to Figure 13. Note that Figure 7 is a view of partially enlarged Figure 1 showing the observation points a to c, and the lattice observation images shown in Figure 8 to Figure 10 correspond to the EDS analysis results shown in Figure 11 to Figure 13, respectively.

(Example 17)

(Frictional material)

A frictional material was manufactured using the alkali metal titanate obtained in Example 4.

For raw materials for the frictional material, a phenol resin, artificial graphite, zirconium silicate, antimony trisulfide, a copper fiber, a copper powder, a cashew dust, a rubber powder, an aramid fiber, mica and chromite were mixed in the mixing ratios shown in Table 7 together with the alkali metal titanate manufactured in Example 4 to prepare a mixed powder of raw materials for the frictional material.

The obtained mixed powder of raw materials for the frictional material was preformed at 200 kgf/cm$^2$, the obtained preformed product was preheated at 70°C for 2 hours and then thermoset at 180°C and 400 kgf/cm$^2$, followed by heat treatment at 250°C and 10 kgf/cm$^2$ for 3 hours to obtain a molded body, thereby obtaining a frictional material sized a length of 10 mm, a width of 50 mm and a thickness of 10 mm using the obtained molded body.

<Brake test>

The frictional material obtained in Example 17 was measured for a coefficient of friction in conformity with JASO-C406, which is the standard set by Japanese Automotive Standards Organization. An average value of the coefficients of friction of the second fade test of the second fade recovery test was 0.36.

[Table 2]

| | | | Comparative Example 1 | Example 1 | Example 2 | Example 3 | Example 4 | Example 5 |
|---|---|---|---|---|---|---|---|---|
| Raw material mixture | $TiO_2$ | Total $TiO_2$ amount (g) | 8.4 | 8.4 | 8.4 | 8.4 | 8.4 | 8.4 |
| | | Amount of rutile ore mixed (g) | 0 | 2.2 | 4.4 | 6.6 | 7.1 | 8.8 |
| | | Rutile ore-derived $TiO_2$ content ratio in total $TiO_2$ (mass%) | 0 | 25 | 50 | 75 | 80 | 100 |
| | $Na_2CO_3$ | Amount mixed (g) | 2 | 2 | 2 | 2 | 2 | 2 |
| | | Na to 6 moles of Ti (molar ratio) | 2.2 | 2.2 | 2.2 | 2.2 | 2.2 | 2.2 |
| | $K_2CO_3$ | Amount mixed (g) | 0 | 0 | 0 | 0 | 0 | 0 |
| | | K to 6 moles of Ti (molar ratio) | 0 | 0 | 0 | 0 | 0 | 0 |
| | | (Na/ (Na+K)) *100 (mol%) | 100 | 100 | 100 | 100 | 100 | 100 |
| | | Ti/ (Na+K) (molar ratio) | 2.8 | 2.8 | 2.8 | 2.8 | 2.8 | 2.8 |
| Firing condition | | Firing temperature (°C) | 980 | 980 | 980 | 980 | 980 | 980 |
| | | Firing time (h) | 1 | 1 | 1 | 1 | 1 | 1 |
| Alkali metal titanate | | ((Si+Al) /Ti) *100 (mass%) | 0.01 | 0.45 | 0.92 | 1.29 | 1.39 | 1.72 |
| | | (Na/ (Na+K)) *100 (mol%) | 100 | 100 | 100 | 100 | 100 | 100 |
| | | Number of WHO fibers (fibers) | 201 | 37 | 60 | 42 | 52 | 21 |
| | | Proportion of number of WHO fibers (%) | 0.287 | 0.053 | 0085 | 0.06 | 0.074 | 0.03 |
| | | Specific surface area (g/m$^2$) | 4.8 | 3.8 | 3 | 2.9 | 2.8 | 2.5 |

[Table 3]

| | | | Comparative Example 2 | Comparative Example 3 | Example 6 | Example 7 |
|---|---|---|---|---|---|---|
| Raw material mixture | TiO$_2$ | Total TiO$_2$ amount (g) | 8.4 | 8.4 | 8.4 | 8.4 |
| | | Amount of rutile ore mixed (g) | 0 | 0.9 | 1.8 | 2.2 |
| | | Rutile ore-derived TiO$_2$ content ratio in total TiO$_2$ (mass%) | 0 | 10 | 20 | 25 |
| | Na$_2$CO$_3$ | Amount mixed (g) | 1.5 | 1.5 | 1.5 | 1.5 |
| | | Na to 6 moles of Ti (molar ratio) | 1.6 | 1.6 | 1.6 | 1.6 |
| | K$_2$CO$_3$ | Amount mixed (g) | 0.7 | 0.7 | 0.7 | 0.7 |
| | | K to 6 moles of Ti (molar ratio) | 0.5 | 0.5 | 0.5 | 0.5 |
| | | (Na/ (Na+K)) *100 (mol%) | 75 | 75 | 75 | 75 |
| | | Ti/ (Na+K) (molar ratio) | 2.8 | 2.8 | 2.8 | 2.8 |
| Firing condition | | Firing temperature (°C) | 980 | 980 | 980 | 980 |
| | | Firing time (h) | 1 | 1 | 1 | 1 |
| Alkali metal titanate | | ((Si+Al) /Ti) *100 (mass%) | 0.03 | 0.20 | 0.36 | 0.49 |
| | | (Na/ (Na+K)) *100 (mol%) | 75 | 75 | 75 | 75 |
| | | Number of WHO fibers (fibers) | 201 | 653 | 138 | 93 |
| | | Proportion of number of WHO fibers (%) | 0.287 | 0.933 | 0.197 | 0.133 |
| | | Specific surface area (g/m$^2$) | 4.8 | 4.8 | 4.2 | 3.8 |

[Table 4]

| | | | Example 8 | Example 9 | Example 10 |
|---|---|---|---|---|---|
| Raw material mixture | TiO$_2$ | Total TiO$_2$ amount (g) | 8.4 | 8.4 | 8.4 |
| | | Amount of rutile ore mixed (g) | 4.4 | 6.6 | 8.8 |
| | | Rutile ore-derived TiO$_2$ content ratio in total TiO$_2$ (mass%) | 50 | 75 | 100 |
| | Na$_2$CO$_3$ | Amount mixed (g) | 1.5 | 1.5 | 1.5 |
| | | Na to 6 moles of Ti (molar ratio) | 1.6 | 1.6 | 1.6 |
| | K$_2$CO$_3$ | Amount mixed (g) | 0.7 | 0.7 | 0.7 |
| | | K to 6 moles of Ti (molar ratio) | 0.5 | 0.5 | 0.5 |
| | | (Na/ (Na+K)) *100 (mol%) | 75 | 75 | 75 |
| | | Ti/ (Na+K) (molar ratio) | 2.8 | 2.8 | 2.8 |
| Firing condition | | Firing temperature (°C) | 980 | 980 | 980 |
| | | Firing time (h) | 1 | 1 | 1 |
| Alkali metal titanate | | ((Si+Al) /Ti) *100 (mass%) | 0.87 | 1.29 | 1.72 |
| | | (Na/ (Na+K)) *100 (mol%) | 75 | 75 | 75 |
| | | Number of WHO fibers (fibers) | 64 | 14 | 20 |
| | | Proportion of number of WHO fibers (%) | 0.091 | 0.02 | 0.029 |
| | | Specific surface area (g/m$^2$) | 3.3 | 3.1 | 3 |

[Table 5]

| | | | Example 11 | Example 12 | Example 13 | Example 14 | Example 15 | Example 16 |
|---|---|---|---|---|---|---|---|---|
| Raw material mixture | $TiO_2$ | Total $TiO_2$ amount (g) | 8.4 | 8.4 | 8.4 | 8.4 | 8.4 | 8.4 |
| | | Amount of rutile ore mixed (g) | 4.4 | 4.4 | 4.4 | 4.4 | 4.4 | 4.4 |
| | | Rutile ore-derived $TiO_2$ content ratio in total $TiO_2$ (mass%) | 50 | 50 | 50 | 50 | 50 | 50 |
| | $Na_2CO_3$ | Amount mixed (g) | 2 | 2 | 2 | 1.5 | 1.5 | 1.5 |
| | | Na to 6 moles of Ti (molar ratio) | 2.2 | 2.2 | 2.2 | 1.6 | 1.6 | 1.6 |
| | $K_2CO_3$ | Amount mixed (g) | 0 | 0 | 0 | 0.7 | 0.7 | 0.7 |
| | | K to 6 moles of Ti (molar ratio) | 0 | 0 | 0 | 0.5 | 0.5 | 0.5 |
| | | (Na/ (Na+K)) *100 (mol%) | 100 | 100 | 100 | 75 | 75 | 75 |
| | | Ti/ (Na+K) (molar ratio) | 2.8 | 2.8 | 2.8 | 2.8 | 2.8 | 2.8 |
| Firing condition | | Firing temperature (°C) | 1100 | 1150 | 1200 | 1000 | 1030 | 1060 |
| | | Firing time (h) | 4 | 4 | 4 | 1 | 1 | 1 |
| Alkali metal titanate | | ((Si+Al) /Ti) *100 (mass%) | 0.92 | 0.92 | 0.92 | 0.87 | 0.87 | 0.87 |
| | | (Na/ (Na+K)) *100 (mol%) | 100 | 100 | 100 | 75 | 75 | 75 |
| | | Number of WHO fibers (fibers) | 87 | 104 | 91 | 57 | 101 | 49 |
| | | Proportion of number of WHO fibers (%) | 0.124 | 0.149 | 0.13 | 0.081 | 0.144 | 0.07 |
| | | Specific surface area (g/m²) | 0.7 | 0.7 | 0.7 | 3.3 | 2.6 | 2.6 |

[Table 6]

|  |  |  | Comparative Example 4 | Comparative Example 5 | Comparative Example 6 |
|---|---|---|---|---|---|
| Raw material mixture | TiO$_2$ | Total TiO$_2$ amount (g) | 8.4 | 8.4 | 8.4 |
|  |  | Amount of rutile ore mixed (g) | 0 | 0 | 0 |
|  |  | Rutile ore-derived TiO$_2$ content ratio in total TiO$_2$ (mass%) | 0 | 0 | 0 |
|  | Na$_2$CO$_3$ | Amount mixed (g) | 1.7 | 1.42 | 1.1 |
|  |  | Na to 6 moles of Ti (molar ratio) | 1.84 | 1.51 | 1.19 |
|  | K$_2$CO$_3$ | Amount mixed (g) | 0.4 | 0.8 | 1.2 |
|  |  | K to 6 moles of Ti (molar ratio) | 0.3 | 0.6 | 1 |
|  |  | (Na/ (Na+K)) *100 (mol%) | 85 | 70 | 55 |
|  |  | Ti/ (Na+K) (molar ratio) | 2.8 | 2.8 | 2.8 |
| Firing condition |  | Firing temperature (°C) | 980 | 980 | 980 |
|  |  | Firing time (h) | 1 | 1 | 1 |
| Alkali metal titanate |  | ((Si+Al) /Ti) *100 (mass%) | 0.02 | 0.02 | 0.02 |
|  |  | (Na/ (Na+K)) *100 (mol%) | 85 | 70 | 55 |
|  |  | Number of WHO fibers (fibers) | 693 | 1077 | 794 |
|  |  | Proportion of number of WHO fibers (%) | 0.99 | 1.538 | 1.134 |
|  |  | Specific surface area (g/m$^2$) | 6.1 | 5.9 | 5.9 |

[Table 7]

| Example 17 | |
|---|---|
| Raw materials for friction material | Mixing ratio (mass%) |
| Alkali metal titanate (Example 4) | 19.5 |
| Phenol resin | 9.5 |
| Artificial graphite | 8.7 |
| Barium sulfate | 25.3 |
| Zirconium silicate | 7.8 |

(continued)

| Example 17 | |
|---|---|
| Raw materials for friction material | Mixing ratio (mass%) |
| Antimony trisulfide | 3.6 |
| Copper fiber | 5.0 |
| Copper powder | 3.0 |
| Cashew dust | 5.4 |
| Rubber powder | 2.6 |
| Aramid fiber | 3.4 |
| Mica | 5.2 |
| Chromite | 1.0 |

(Example 18)

(Raw material mixture)

Using 48.6 kg of a titanium oxide ($TiO_2$ (a commercial product) for raw material, an average particle size 0.6 $\mu$m) and 50.4 kg of a rutile ore (a commercial product) as the titanium sources and 23.6 kg of sodium carbonate (manufactured by Tokuyama Corporation, product name Soda Ash Dense) as the sodium source, each of the raw materials weighed as above and 0.5 L of a denatured alcohol (manufactured by Sankyo Chemical Co., Ltd.) were mixed using a vibrating mill (manufactured by CHUO KAKOHKI CO., LTD.) at an amplitude width of 6 mm for 20 minutes to obtain a raw material mixture.

(Firing)

The raw material mixture obtained above was fired in a rotary kiln furnace under an air atmosphere at a temperature of 1060°C thereby to obtain a raw material mixture. Subsequently, the raw material mixture was sequentially fed at a rate of 50 kg/hr to a vibrating mill (manufactured by CHUO KAKOHKI CO., LTD.) and an impact pulverizer (manufactured by Hosokawamicron Corporation, ACM pulverizer) in this order to carry out pulverization treatment thereby to obtain a powder alkali metal titanate.
The obtained alkali metal titanate was analyzed. The results are shown in Table 8.

(Analysis)

<Composition>

Measurement was carried out using a powder X-ray diffractometer (X-ray source: CuK$\alpha$ ray, manufactured by PANalytical B.V. model number: X'Part-ProMPD).

<Average particle size>

An average particle size (D50) was measured by the laser diffraction scattering method. LA920, manufactured by HORIBA, Ltd., was used as the analyzer.

<Average crystallite size>

For the average crystallite size, X-ray diffraction analysis of an object to be measured was carried out under measurement conditions shown in Table 1 using a powder X-ray diffractometer (PANalytical B.V. model number: X'Pert PRO), and calculation was made by the above Scherrer equation (2) based on a half width (plane indices (200)) of the main peak to be determined by the obtained XRD measurement result.

(Evaluation on friction durability)

(Manufacture of a frictional material)

A frictional material was manufactured using the alkali metal titanate obtained in Example 18.

For raw materials for the frictional material, a phenol resin, artificial graphite, zirconium silicate, antimony trisulfide, a copper fiber, a copper powder, a cashew dust, a rubber powder, an aramid fiber, mica and chromite were mixed in the mixing ratios shown in Table 9 together with the alkali metal titanate manufactured in Example 18 to prepare a mixed powder of raw materials for the frictional material.

The obtained mixed powder of raw materials for the frictional material was preformed at 200 kgf/cm$^2$, the obtained preformed product was preheated at 70°C for 2 hours and then thermoset at 180°C and 400 kgf/cm$^2$, followed by heat treatment at 250°C and 10 kgf/cm$^2$ for 3 hours to obtain a molded body, thereby obtaining a frictional material sized a length of 10 mm, a width of 50 mm and a thickness of 10 mm using the obtained molded body.

(Friction durability test)

The test was carried out in conformity with JASO C427. The results are shown Table 10.

(Example 19)

An alkali metal titanate and a frictional material for the test were obtained in the same manner as in Example 18, except that the raw material mixture was fired in a tunnel kiln furnace under an air atmosphere at a temperature of 1250°C.

(Comparative Examples 7)

An alkali metal titanate and a frictional material for the test were obtained in the same manner as in Example 18, except that the feeding raw materials were changed from the sodium carbonate used as the sodium source to 30.7 kg potassium carbonate (manufactured by Unid Co., Ltd.) as the potassium source.

[Table 8]

| | | | Example 18 | Example 19 | Comparative Example 7 |
|---|---|---|---|---|---|
| Raw material mixture | | Na/Ti (molar ratio) | 3.3 | 3.3 | - |
| | | K/Ti (molar ratio) | - | - | 3.3 |
| Firing condition | | Firing temperature (°C) | 1060 | 1250 | 1060 |
| | | Firing time (h) | 0.5 | 4.0 | 0.5 |
| Alkali metal titanate | | Na/Ti (molar ratio) | 3.0 | 2.9 | - |
| | | K/Ti (molar ratio) | - | - | 3.0 |
| | | (Na/ (Na+K)) *100 (mol%) | 100 | 100 | 0 |
| | | Average particle size (D50) (μm) | 3.3 | 13.2 | 15.3 |
| | | Content of WHO fiber (vol%) | 0.003 | 0.001 | 0.027 |
| | Average crystallite size | Half width (°2Th) | 0.119 | 0.120 | 0.120 |
| | | Crystallite size (nm) | 88.7 | 87.9 | 87.9 |

[Table 9]

| Raw materials for friction material | Mixing ratio (mass%) |
|---|---|
| Alkali metal titanate (Example 18) | 19.5 |
| Phenol resin | 9.5 |
| Artificial graphite | 8.7 |
| Barium sulfate | 25.3 |
| Zirconium silicate | 7.8 |
| Antimony trisulfide | 3.6 |
| Copper fiber | 5.0 |
| Copper powder | 3.0 |
| Cashew dust | 5.4 |
| Rubber powder | 2.6 |
| Aramid fiber | 3.4 |
| Mica | 5.2 |
| Chromite | 1.0 |

[Table 10]

| | Abrasion loss equivalent to the number of brakes of 1000 times (mm) | |
| --- | --- | --- |
| | 100°C Condition | 400°C Condition |
| Example 18 | 0.19 | 0.57 |
| Example 19 | 0.18 | 0.62 |
| Comparative Example 7 | 0.25 | 0.66 |

**Claims**

1. An alkali metal titanate, comprising an alkali metal titanate phase and a composite oxide containing Al, Si and Na, wherein a percentage of a ratio of the number of moles of Na to a total number of moles of Na and an alkali metal X other than Na, ((Na/(Na + X)) × 100), is 50 to 100 mol%, and
a percentage of a ratio of a total content of Si and Al to a content of Ti, (((Si + Al)/Ti) × 100), is 0.3 to 10 mass%.

2. The alkali metal titanate according to claim 1,
wherein a proportion of the number of fibers of a compound having a shorter diameter d of 3 $\mu$m or less, a longer diameter L of 5 $\mu$m or more and an aspect ratio (L/d) of 3 or more is 0.2% or less.

3. A method for producing an alkali metal titanate, comprising:

   a raw material mixing step of mixing raw materials containing Ti, an alkali metal, Si and Al such that a percentage of a ratio of the number of moles of Na to a total number of moles of Na and an alkali metal X other than Na, ((Na/(Na + X)) × 100), is 50 to 100 mol% to prepare a raw material mixture,
   a firing step of firing the raw material mixture at a firing temperature of 900 to 1300°C to obtain a fired product of the raw material mixture, and
   a pulverizing step of pulverizing the fired product of the raw material mixture.

4. The method for producing an alkali metal titanate according to claim 3,
wherein the raw material mixture contains a titanium source containing Ti and an alkali metal source containing an alkali metal, and
the titanium source contains Al and Si.

5. The method for producing an alkali metal titanate according to claim 4, wherein, as the titanium source, a titanium ore having a content of Si of 0.5 to 3.0 mass% and a content of Al of 0.1 to 1.0 mass% based on a content of Ti is contained, and
a content ratio of the titanium ore in the titanium source is 20 mass% or more.

6. The method for producing an alkali metal titanate according to any one of claim 4 or 5, comprising mixing the titanium source and the alkali metal source in the raw material mixing step such that a ratio of the number of moles of Ti to a total number of moles of Na and an alkali metal X other than Na (Ti/(Na + X)) in the raw material mixture is 2.4 to 3.6.

7. A frictional material comprising the alkali metal titanate according to any one of claim 1 or 2.

8. An alkali metal titanate, having:

   a percentage of a ratio of the number of moles of Na to a total number of moles of Na and K, (Na/(Na + K) × 100), of 50 to 100 mol%,
   an average particle size (D50) by the laser diffraction scattering method of 15 $\mu$m or less, and
   a content of a compound having a shorter diameter d of 3 $\mu$m or less, a longer diameter L of 5 $\mu$m or more and an aspect ratio (L/d) of 3 or more, of 0.025 vol% or less.

9. The alkali metal titanate according to claim 8, wherein the average particle size (D50) is 1 to 15 $\mu$m.

10. A method for producing an alkali metal titanate, comprising:

a raw material mixing step of mixing a titanium source containing Ti and an alkali metal source containing an alkali metal such that a percentage of a ratio of the number of moles of Na to a total number of moles of Na and K, (Na/(Na + K)) × 100), is 50 to 100 mol% to prepare a raw material mixture,
a firing step of firing the raw material mixture at a firing temperature of 900 to 1300°C to obtain a fired product of the raw material mixture, and
a pulverizing step of pulverizing the fired product of the raw material mixture.

11. A frictional material comprising the alkali metal titanate according to any one of claim 8 or 9.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

[FIG. 13]

## INTERNATIONAL SEARCH REPORT

| International application No. |
| --- |
| PCT/JP2018/041922 |

### A. CLASSIFICATION OF SUBJECT MATTER
Int. Cl. C01G23/00(2006.01)i, F16D69/02(2006.01)i

According to International Patent Classification (IPC) or to both national classification and IPC

### B. FIELDS SEARCHED

Minimum documentation searched (classification system followed by classification symbols)
Int. Cl. C01G23/00, F16D69/02

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>A | JP 42-27264 B1 (E.I. DU PONT DE NEMOURS & CO.) 23 December 1967, claims, page 1, right column, line 33 to page 2, left column, line 26, example 5, table 5 (Family: none) | 3, 4, 6, 10<br>1, 2, 5, 7-9, 11 |
| X<br>A | JP 50-17960 B1 (TOKUYAMA SODA CO., LTD.) 25 June 1975, claims, page 3, column 5, lines 14-19 example 1 (Family: none) | 3, 4, 6, 10<br>1, 2, 5, 7-9, 11 |
| X<br>A | JP 2008-303121 A (OTSUKA CHEMICAL CO., LTD.) 18 December 2008, claims, examples, fig. 1, 3, 7, 8 & US 2010/0119826 A1, claims, examples, fig. 1, 3, 7, 8 & W42008/149845 A1 & EP 2154112 A1 & CN 101679068 A & KR 100-2010-0019485 A & HK 1141505 A | 8, 9, 11<br>1-7, 10 |

☒ Further documents are listed in the continuation of Box C.   ☐ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 29.01.2019 | 12.02.2019 |

| Name and mailing address of the ISA/<br>　Japan Patent Office<br>　3-4-3, Kasumigaseki, Chiyoda-ku,<br>　Tokyo 100-8915, Japan | Authorized officer |
| | Telephone No. |

Form PCT/ISA/210 (second sheet) (January 2015)

**INTERNATIONAL SEARCH REPORT**

International application No.

PCT/JP2018/041922

C (Continuation).   DOCUMENTS CONSIDERED TO BE RELEVANT

| Category* | Citation of document, with indication, where appropriate, of the relevant passages | Relevant to claim No. |
|---|---|---|
| A | JP 46-1359 A (E.I. DU PONT DE NEMOURS & CO.) 21 September 1971, claims, examples (Family: none) | 1-11 |
| A | US 3649171 A (E.I. DU PONT DE NEMOURS & CO.) 14 March 1972, claims, examples & GB 1329481 A & DE 2107430 A1 & FR 2080595 A1 & CA 950640 A | 1-11 |
| A | CN 103359781 A (UNIVERSITY PANZHIHUA) 23 October 2013, claims, examples (Family: none) | 1-11 |
| A | JP 6-271318 A (KUBOTA CORP.) 27 September 1994, claims, paragraphs [0001], [0009], examples (Family: none) | 1-11 |
| A | JP 2009-67639 A (KUBOTA CORP.) 02 April 2009, claims, paragraphs [0001], [0014] & US 2010/0323876 A1, claims, paragraphs [0001], [0019] & WO 2009/035166 A1 & EP 2189419 A1 & CA 2699462 A1 & KR 10-2010-0040977 A & CN 101801851 A | 1-11 |
| A | JP 2000-192014 A (OTSUKA CHEMICAL CO., LTD.) 11 July 2000, claims, paragraph [0001], examples (Family: none) | 1-11 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008266131 A